(19) Europäisches Patentamt / European Patent Office / Office européen des brevets

(11) **EP 2 274 787 B1**

(12) **EUROPEAN PATENT SPECIFICATION**

(45) Date of publication and mention
of the grant of the patent:
**07.11.2018 Bulletin 2018/45**

(21) Application number: **09746764.1**

(22) Date of filing: **14.05.2009**

(51) Int Cl.:
*H01M 10/02* (2006.01)  *H01M 2/16* (2006.01)
*B32B 27/32* (2006.01)  *B32B 27/06* (2006.01)
*B32B 7/02* (2006.01)  *B32B 7/10* (2006.01)
*B32B 27/08* (2006.01)  *B32B 27/18* (2006.01)
*B32B 27/20* (2006.01)  *B32B 1/00* (2006.01)
*B32B 3/00* (2006.01)  *B32B 3/26* (2006.01)
*H01M 10/0525* (2010.01)

(86) International application number:
**PCT/KR2009/002561**

(87) International publication number:
**WO 2009/139585 (19.11.2009 Gazette 2009/47)**

(54) **MICROPOROUS POLYOLEFIN FILM WITH THERMALLY STABLE POROUS LAYER AT HIGH TEMPERATURE**

MIKROPORÖSER POLYOLEFINFILM MIT EINER BEI HOHEN TEMPERATUREN WÄRMESTABILEN PORÖSEN SCHICHT

FILM MICROPOREUX DE POLYOLÉFINE AVEC UNE COUCHE POREUSE THERMIQUEMENT STABLE À HAUTE TEMPÉRATURE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **16.05.2008 KR 20080045735**

(43) Date of publication of application:
**19.01.2011 Bulletin 2011/03**

(73) Proprietor: **SK Innovation Co., Ltd.
Seoul 110-110 (KR)**

(72) Inventors:
• **RHEE, Jang-weon
Daejeon 305-728 (KR)**
• **JUNG, Inhwa
Cheonan-si
Chungcheongnam-do 330-873 (KR)**
• **KANG, Gwigwon
Daejeon 305-810 (KR)**
• **LEE, Youngkeun
Seoul 137-949 (KR)**

(74) Representative: **Beckmann, Claus et al
Kraus & Weisert
Patentanwälte PartGmbB
Thomas-Wimmer-Ring 15
80539 München (DE)**

(56) References cited:
**WO-A1-2007/049568    CA-A1- 2 627 137
DE-A1- 19 859 334    JP-A- 2006 321 151
JP-A- 2007 123 238    US-A1- 2007 207 376**

## Description

### Technical Field

The present invention relates to a microporous film for a secondary battery, and more particularly, to a microporous film for a secondary battery with excellent quality stability and heat resistance.

### Background Art

Among methods to prepare a microporous film, a wet process to make a single phase by mixing polyolefin with diluent at high temperature, to phase-separate the polyolefin from the diluent during a cooling process and then to form pores by extracting the diluent portion is able to make the thinner film and has excellent strength, uniform pores, and excellent quality stability, such that it has been widely used in a high-capacity/high-power lithium ion secondary battery, etc.

Although the lithium ion secondary battery is an excellent battery having a very high energy density, it has danger of explosion when a short is generated, such that a separator used therein is greatly requested to have quality stability together with a high quality level. In accordance with the recent trend of high-capacity and high-power of the lithium ion secondary battery such as a battery for a hybrid vehicle, etc., there has been a greater demand for a thermal stability of the separator, in addition to the quality stability of the conventional wet product. This is the reason that If the thermal stability of the separator is deteriorated, the danger of explosion by the melt fracture of the separator according to overheat of the battery is increased.

The thermal stability of the separator in the battery is determined depending on a shutdown temperature and a melt fracture temperature. The shutdown temperature is a temperature that when the inside temperature of the battery is abnormally increased, micropores of the separator are shutdown to allow current not to be flowed further. The melt fracture temperature is a temperature that when the temperature of the battery is continuously increased over the shutdown temperature, the separator is melt-fractured to allow current to be flowed again. For the stability of the battery, it is preferable that the shutdown temperature is low and the melt fracture temperature is high. In particular, the melt fracture temperature, which is a temperature that can continuously block current in a situation where the explosion of the battery may be caused, has the closest relation in the stability of the battery.

The efforts to improve the thermal stability of the separator have been broadly made in three ways. There are a method to increase heat resistance by adding inorganic materials or resin having heat resistance to the conventional polyethylene, a method to coat material having heat resistance on a surface, and a method to prepare a multilayer separator formed with a surface layer having heat resistance.

U.S. Patent No. 6,949,315 discloses a film that improves thermal stability of a separator by melt-mixing inorganic materials such as 5-15 wt% titanium oxide to ultrahigh molecular weight polyethylene. However, this method may easily cause problems that melt-mixing property is deteriorated due to adding of the inorganic materials, and pin-holes are generated and quality becomes non-uniform when being stretched due to the deteriorated melt-mixing ability, and may cause deterioration in the physical property of the film such as impact strength, etc., due to a lack of compatibility of interface between the inorganic materials and polymer resin, despite the improvement in the thermal stability due to the addition of the inorganic materials. The separator using inorganic materials cannot but have the disadvantages as described above.

A separator that is prepared by melt-mixing resin having excellent heat resistance instead of inorganic materials is disclosed in U.S. Patent No. 5,641,565. This technique is to mix 30-75 wt% organic liquid-phase compound and 10-50 wt% inorganic materials with a resin compound where polyethylene is mixed with 5-45 wt% polypropylene and then to extract the organic liquid-phase compound and the inorganic materials, thereby preparing a separation membrane. Although this technique extracts inorganic materials, it still has the problems at the time of melt-mixing as described above and further causes a problem that physical property is deteriorated due to the addition of polypropylene that does not have melt-mixing ability with polyethylene as mentioned in the patent itself. Also, this method is added with processes of extracting and removing the used inorganic materials, thereby having a disadvantage that the process becomes complicated, and this method needs a relatively high amount of polypropylene in order to obtain a sufficient heat resistance effect, wherein the physical property of the separator is more deteriorated.

A method to coat material having heat resistance on a surface of microporous film is disclosed in U.S. Patent Publication No. 2006-0055075. However, since the coating method has a limit in increasing the permeability of a coating layer, the permeability of the entire film is highly likely to be decreased and the non-uniform quality is highly likely to be generated due to the deterioration in wetting property between the coating layer and the microporous film.

The method to prepare a multilayer separator for improving the thermal stability of a separator is to use lamination. U.S. Patent No. 5,691,077 discloses a method of making a 3 layer separator by laminating polypropylene layer having a high melt fracture temperature (having a high melting temperature) on polyethylene having excellent shutdown property (having a low melting temperature). Although this separator is excellent in view of thermal property, it has not only a deterioration problem in productivity due to the addition of the lamination process performed in a separate process but also a delamination problem due to the defect of the lamination, in addition to the disadvantages of the stretching non-uniformity, the generation of pin-holes, and the increase of thickness deviation, etc. during the preparation method of a fabric film by a low temperature dry process (a method to form pores by causing cracks in a film during the stretching process, not using diluent as raw material), such that this separator has not been widely used. This method has problems that strength, permeability, quality uniformity, and productivity, which are indispensable for a separator for a secondary battery, are deteriorated, despite excellent heat resistance.

Japanese Patent Laid-Open No. 2007-088815 and PCT Publication No.WO04/089627 disclose multilayer separators that have a microporous polyethylene film prepared using a wet process as a main layer and have a layer mixed with polyethylene and polypropylene prepared using a wet process as a surface layer. Although these separators prepared using a wet process may have excellent quality stability, they have a limit in having heat resistance more than heat resistance of polypropylene resin. Also, all of the multilayer separators are prepared using a wet process, having a disadvantage that the preparation process becomes complicated. Furthermore, due to the low crystallinity of the polypropylene, when being used as a surface layer in wet process extruded with diluent, there are a lot of wax components in the diluent after being extruded to generate a problem that a film and a roll surface are polluted due to the wax extraction during post-processings such as stretching/ extrusion, etc, thereby deteriorating quality stability.

PCT Publication No.WO06/038532 discloses a multilayer wetting separator with a surface layer including inorganic materials. However, this separator also has a complicated melt-mixing process caused as all of the multilayer separators are prepared using a wet process as described above, and includes the diluent of 50% or more, which must be extruded during the film manufacturing process, in the surface layer to present a little improvement of physical property in production (a stretching effect is reduced since the stretching is performed in a softened state including the diluent). Also, if inorganic materials are added into the surface layer, the inorganic materials are separated during processes of stretching/extrusion/winding/slitting, etc. so that it may cause pollution due to inorganic powder and scratch of other surface layers, thereby deteriorating quality stability.

The indispensable properties of a separator for a secondary battery are strength, permeability, and quality uniformity (stability), and in recent, there is a great demand for thermal stability additionally. However, the conventional techniques as described above could not have accomplished the quality stability, the strength/permeability at the level of the separator using a wet process simultaneously with a high thermal stability.

CA 2 627 137 A1 describes (1) a combination of a microporous layer made of a polyethylene resin and a microporous layer made of polypropylene and a heat-resistant resin having a melting point or a glass transition temperature of 170°C or higher, and (2) a combination of a microporous layer made of a polyethylene resin and a microporous layer made of polypropylene and inorganic filler having an aspect ratio of 2 or more, which provide a multi-layer, microporous polyolefin membrane with well-balanced permeability, mechanical strength, heat shrinkage resistance, shutdown properties and meltdown properties.

**Disclosure of Invention**

**Technical Problem**

After having repeated broad studies in order to solve the problems of the prior arts as described above, the present inventors found that if a mixture of polypropylene and a filler is stretched without using diluent, an interface therebetween is cracked and pores are generated on the interface, making it possible to prepare a porous film constituted by the polypropylene and the filler.

An object of the present invention is to provide a microporous film for a secondary battery that can prepare a multilayer separator that has heat resistance property of a porous film mixed with polypropylene having excellent heat resistance and the filler simultaneously with quality stability property of a microporous polyethylene film prepared using a wet process, if the porous film is used as a separate internal layer and a porous film prepared using a wet process is used as both surface layers, wherein the separator has very excellent strength, permeability, thermal stability, and quality stability at the same time.

**Technical Solution**

To achieve the above objects, the present invention provides a microporous film that is a 3 layer microporous film, including an inner layer that includes polypropylene of 20-80 wt% having a melting temperature of 150°C or higher and a filler of 80-20 wt% having a melting temperature of 140°C or higher, wherein a gross content of the filler and polypropylene in the inner layer is 60wt% or more, and both surface layers include polyethylene, at least one layer of the both surface layers includes polyethylene of

70wt% or more, and wherein the filler having a melting temperature of 140 °C or higher is selected from silicon dioxide ($SiO_2$), aluminum dioxide ($Al_2O_3$), calcium carbonate ($CaCO_3$), titanium dioxide ($TiO_2$), $SiS_2$, $SiPO_4$, MgO, ZnO, $BaTiO_3$ and a mixture thereof and the filler has an average particle size of 0.01 to 5 μm.

Also, the present invention provides a multilayer microporous film including the 3 layer microporous film.

Hereinafter, the present invention will be described in more detail.

The basic theory to prepare a microporous film for a secondary battery used in the present invention is as follows.

As described above, the wet process to prepare the microporous film with polyethylene uses a basic process to fabricate a film by fabricating and stretching a sheet by mixing and extruding polyethylene and diluent corresponding thereto and then to extract the diluent using an organic solvent. However, the separator prepared using polyethylene has a limit in heat resistance, since the melting temperature of polyethylene cannot exceed 135°C. To the contrary, although the melting temperature of polypropylene can rise to 160°C or higher, it has a low crystallinity so that it is difficult to manufacture a film having a high permeability using the wet process and furthermore, has a high shutdown temperature due to the high melting temperature so that stability is deteriorated. The shutdown temperature is a temperature that when the inside temperature of the battery is abnormally increased, micropores of the separator are shutdown to allow current not to be flowed further. The lower the shutdown temperature is, the better the separator is.

In order to overcome the problem, if polypropylene and heat-resistance filler are melt-mixed with polyethylene, the melt fracture temperature is increased to improve heat resistance as described above, however, heat resistance materials exist in a matrix as a particle form, and are not connected to each other so that the melt fracture temperature is not greatly increased and the interface with polyethylene is weak, deteriorating the physical property of the entire film.

Therefore, a multilayer separator should be prepared to have polyethylene layer as a separate layer and a layer that includes polypropylene and a filler as a separate layer, not melt-mixing polyethylene, polypropylene and the filler together. Then, polypropylene is continuously connected in the layer that includes polypropylene and the filler and the filler exists as a particle form in the polypropylene matrix. Consequently, the multilayer microporous film prepared as above can have a low shutdown temperature of polyethylene and a high melt fracture temperature that heat resistance of the filler is added to a high melting temperature of polypropylene, at the same time.

When polypropylene and the filler are simply mixed, permeability is not shown. In order to give permeability to polypropylene and the filler layer, a stretching process of wet process in preparing separator is used together in the present invention. In other words, if a sheet made of a mixture of polyethylene and the diluent and a sheet made of polypropylene and the filer are made as a multilayer sheet and are stretched, an interface between polypropylene and the filler is cracked on a mixture layer of polypropylene and the filler (at this time, the filler must exist in a solid state at a stretching temperature) to form pores. Thereafter, if the diluent of the polyethylene layer is extracted through an extracting process, it leads to preparation of a multilayer microporous film that uses wet process and has the property of excellent stability by polyethylene separator and simultaneously excellent heat resistance/electrolyte impregnation/strength and permeability by polypropylene and the filler.

At this time, it is important to make the layer of the porous film 3 layer or more and to necessarily make the layer of polypropylene and the filler an internal layer. This is the reason that the filler used in the surface layer is separated during processes of stretching/extrusion/winding/slitting, etc., having a powder shape, so that it may cause pollution due to powder and scratch of other surface layers, thereby deteriorating quality stability. If the layer that includes polypropylene and the filler is put as an internal layer, the problem is not generated at all, and it is possible to secure excellent quality stability and to increase productivity.

The property of the separator pore is as follows: a pore of the layer made of polyethylene is a micropore formed as polyethylene and diluent are phase-separated and then stretching and extrusion processes are performed thereon, and a pore of the layer made of polypropylene and the filler is a macropore formed as the interface between polypropylene and the filler is cracked.

The multilayer microporous film according to the present invention and the preparation method thereof will be described in more detail.

The microporous film according to the present invention basically has a multilayer structure with 3 layer. A layer may be added in order to give separate functionality to the basic structure with 3 layer, as needed.

The inner layer includes polypropylene of 20-80 wt% having a melting temperature of 150°C or higher and a filler of 80-20 wt% having a melting temperature of 140°C or higher as defined in claim 1. The inner layer should form a macropore as the interface between polypropylene and the filler is cracked through a stretching process, and should have a matrix structure where polypropylene is continuously connected in order to maintain excellent heat resistance of polypropylene. Therefore, the content of polypropylene and the filler should be determined in the range that meets the said condition.

The content of polypropylene is 20-80wt%. If the content of polypropylene is above 80wt%, the amount of filler is reduced and the pore generated during the stretching process is also reduced so that permeability is noticeably reduced. To the contrary, if the content of polypropylene is below 20wt%, polypropylene is not connected in a matrix form but is isolated so that the physical property of the porous film is deteriorated and the improvement effect of heat resistance is noticeably decreased. The content of polypropylene is preferably 30-70 wt%, more preferably, 40-60 wt%.

In the present invention, the polypropylene is homopolypropylene or polypropylene copolymer copolymerized with propylene, ethylene and olefin having 4-8 carbon atoms, or a mixture thereof. The melting temperature of polypropylene in the present invention is 150°C or higher, more specifically, 150°C to 170°C. The higher the melting temperature of polypropylene, the more excellent the heat resistance is. Therefore, the more preferable melting temperature is 160°C or higher and homopolypropylene is most preferable in consideration thereof.

The weight-average molecular weight of the polypropylene used as above is $5\times10^4$ to $2\times10^6$. If the weight-average molecular weight of polypropylene is below $5\times10^4$, the melt-mixing with inorganic material is excellent but the physical property of the microporous film is deteriorated, if the weight-average molecular weight of polypropylene is above $2\times10^6$, a problem of melt-mixing with inorganic material occurs, so that they are not preferable.

The filler used in the present invention includes the following roles. The first role is a core role to make pores on the interface during the stretching process after being melt-mixed with polypropylene. The second and third roles of the filler are to increase heat resistance of the porous film and to improve electrolyte impregnation through excellent affinity with electrolyte due to the polarity of the filler itself.

As the filler having a melting temperature of 140°C or higher used in the present invention, there are silicon dioxide ($SiO_2$), aluminum dioxide ($Al_2O_3$), calcium carbonate ($CaCO_3$), titanium dioxide ($TiO_2$), $SiS_2$, $SiPO_4$, MgO, ZnO, $BaTiO_3$, having an average particle size of $0.01\mu m$ to $5\mu m$, or a mixture thereof.

As the filler used in the present invention, a filler having a melting temperature of 140°C or higher is used and the melting temperature of heat resistance resins is preferably about 140°C to 300°C, but it is not limited thereto. When the melting temperature of the filler is below 140°C, flexibility is generated at the stretching temperature so that pores are not generated on the interface with polypropylene during the stretching process.

Regarding the filler, the particle size thereof is very important in the case of inorganic material. The average particle size is $0.01\mu m$ to $5\mu m$. When the average particle size is below $0.01\mu m$, the size of the pore formed during the stretching process is small not to be suitable for the porous film, and when the average particle size is above $5\mu m$, the pore is formed to be extremely large after being stretched to deteriorate the physical property of the porous film and also to affect the entire physical property of the separator having a thickness of $7\mu m$ to $50\mu m$ according to the present invention.

The content of the filler is 80-20wt%. If the content of the filler is above 80wt%, the amount of polypropylene is reduced to increase permeability but polypropylene is not connected in a matrix form but is isolated so that the physical property is deteriorated and the improvement effect of heat resistance is noticeably decreased. To the contrary, if the content of the filler is below 20wt%, the pore generated during the stretching process is reduced so that permeability is noticeably reduced. The content of the filler is preferably 30-70 wt%, more preferably, 40-60 wt%.

Besides polypropylene, additives or polyolefin, etc. may be additionally added into the inner layer in the range not to affect the formation of pore of polypropylene and the filler and the function to give heat resistance. The gross content of polypropylene and the filler in the inner layer is preferably 60 wt% or more. If the content of the two components does not exceed 60 wt%, heat resistance effect by polypropylene is not shown and permeability may also be noticeably lowered. More preferably, the gross content is 80wt% or more and still more preferably, the inner layer is constituted by polypropylene and the filler only. The formation of pore and the heat resistance effect are excellent in the case of polypropylene of 40-60 wt% and inorganic material of 60-40 wt%.

Both surface layers of the multilayer separator in the present invention include polyethylene and at least one of the surface layers includes polyethylene of 70wt% or more. As described above, a low shutdown temperature is very important in a separator for a battery. Polyethylene has a low shutdown temperature, while maintaining excellent physical property, so that it is the most preferable resin as a surface layer.

The polyethylene used in the present invention is homopolyethylene or polyethylene copolymer or a mixture thereof. The polyethylene used in the present invention is homopolyethylene polymerized with ethylenes, polyethylene copolymers copolymerized with ethylene and olefin having 3-8 carbon atoms , or a mixture thereof, and has a melting temperature of 125°C or higher. The olefin comonomer having 3-8 carbon atoms may include propylene, 1-butene, 1-hexene, 1-butene, and 4-methylpentene-1. When the melting temperature of polyethylene is below 125°C, polyethylene has a low crystallinity so that permeability of the separator is noticeably lowered. The most preferable melting temperature of polyethylene is 125°C to 135°C.

Also, the molecular weight of the polyethylene preferably has weight average molecular weight of $2\times10^5$ to $3\times10^6$. When the weight average molecular weight is below $2\times10^5$, the physical property of the final porous film becomes weak, and when weight average molecular weight is above $3\times10^6$, extrusion melt-mixing is deteriorated so that productivity is decreased. The more preferable range of the weight average molecular weight of polyethylene is $2\times10^5$ to $1.5\times10^6$.

In the present invention, the content of polyethylene on both surface layers is 70 wt% or more. If the content of polyethylene is below 70 wt%, polyethylene matrix is not completely formed on the surface layer so that pores are not completely closed although polyethylene is melted, and thus, a shutdown temperature may be increased.

The low shutdown temperature property of polyethylene may be accomplished when the content of polyethylene is 70 wt% or more on any one of the surface layers. However, considering the excellent strength and the micro and uniform pore property of the polyethylene porous film, it is more preferable that the content of polyethylene is 80 wt% or more on all of both surface layers. The most preferable composition of the surface layer is made of polyethylene only (polyethylene 100%).

The component that may be used with the polyethylene may include polymethylpentene and polycarbonate, etc. but it is not limited thereto.

Also, the total thickness of the multilayer microporous film for the secondary battery according to the present invention is preferably 7$\mu$m to 50$\mu$m, more preferably, 9$\mu$m to 30$\mu$m. When the thickness of the film is below 7$\mu$m, the entire strength is weak not to be suitable for the separator for the secondary battery, and when the thickness of the film is above 50$\mu$m, permeability is low not to be suitable for the separator for the secondary battery. Considering the curling of the porous film that may be generated during the production, it is most preferable that the constitution of both surface layers has the same composition/same thickness.

The present invention provides a microporous film having a ratio of the inner layer to the entire thickness of 1 to 50%. When the thickness ratio of the inner layer to the entire thickness is below 1%, the improvement effect of heat resistance is not great. When the thickness ratio of the inner layer to the entire thickness is above 50%, the micro and uniform porous structure made by the wet process of the surface becomes below 50% so that the uniformity of the entire film is deteriorated. The more preferable thickness ratio of the inner layer to the total film thickness 100% is 1% to 30%.

Also, the thickness of the inner layer that contributes to the improvement of heat resistance in the microporous film should be at least 0.5$\mu$m to 25$\mu$m. When the thickness of the inner layer is below 0.5$\mu$m, the improvement effect of heat resistance and permeability is not great.

The present invention provides the microporous film for the secondary battery, wherein the multilayer microporous film for the secondary battery has puncture strength of 0.12N/$\mu$m or more, permeability of 1.0X10$^{-5}$ Darcy or more, and melt fracture temperature of 150°C to 220°C.

The puncture strength is preferably 0.12N/$\mu$m or more. When the puncture strength is below 0.12N/$\mu$m, strength is weak not to be suitable for the separator for the secondary battery. The more preferable puncture strength is 0.2 to 0.5N/$\mu$m.

The gas permeability of the multilayer separator is 1.0X10$^{-5}$ Darcy or more. When the gas permeability is below 1.0X10$^{-5}$ Darcy, permeability is not sufficient not to be suitable for a high-capacity/high-efficiency battery. The gas permeability is more preferably 1.5X10$^{-5}$ to 10.0X10$^{-5}$ Darcy, and still more preferably, 2.5X10$^{-5}$ to 8.0X10$^{-5}$ Darcy.

The melt fracture temperature of the microporous film according to the present invention depends on the temperature at polypropylene is melted and the content of the filler, that is, 150°C to 220°C. A heat resistance test of a battery is generally performed at 150°C, however, the temperature of the battery is further increased when a short is generated inside the battery so that the melt fracture temperature is preferably 160°C or higher.

There are two sorts of pores of the porous film prepared according to the present invention.

In the present invention, the pore of the inner layer comprised of polypropylene and the filler is a macropore formed as the interface between polypropylene and the filler is cracked, having an average size of 0.5$\mu$m to 50$\mu$m.

When the pore of this layer is below 0.5$\mu$m, the permeability of the entire film may be deteriorated. To the contrary, when the pore of this layer is above 50$\mu$m, the physical property of the film may be deteriorated and the improvement effect of heat resistance may also be decreased. The reason is that the improvement effect of heat resistance can be maximized when stable polypropylene network is formed as pores below 50$\mu$m are uniformly distributed in polypropylene. The more preferable size of average pore of the layer formed of polypropylene and the filler is 1$\mu$m to 20$\mu$m.

In the present invention, the pore of both surface layers comprised of polyethylene is a micropore formed as polyethylene and the diluent are phase-separated and then stretching/extrusion processes are performed thereon, having an average size of 0.001$\mu$m to 0.1$\mu$m. When the average size is above 0.1$\mu$m, the safety and stability of the entirety of the film are deteriorated. The preferable average size of the micropore is 0.01$\mu$m to 0.1$\mu$m.

One of the methods for preparing the microporous polyolefin film may comprise: (a) melt-mixing a composition configured of polypropylene of 20-80 wt% having a melting temperature of 150°C or higher and a filler of 80-20 wt%; (b) melt-mixing a composition configured of polyethylene of 20-50 wt% having a melting temperature of 125°C or higher and a diluent of 80-50 wt%; (c) fabricating the melt-mixed compositions (a) and (b) to be a multilayer sheet so that the composition in (a) becomes an inner layer and the composition in (b) becomes surface layers; (d) stretching the multilayer sheet in the range that a crystal portions of 30-80% of polyethylene on the surface layer is melted and fabricating it to be a film; (e) extracting the diluent from the film; and (f) heat-setting the film.

Hereinafter, the respective steps will be described in more detail.

(a) melt-mixing a composition configured of polypropylene of 20-80 wt% having a melting temperature of 150°C or higher and a filler of 80-20 wt%, is performed.

The composition is melt-mixed using a twin-screw compounder, a mixer, or a banbary mixer, etc. designed for melt-mixing of polypropylene and the filler. When the filler is resin, the melt-mixing temperature is preferably processed at a higher temperature by 10°C to 50°C compared to the melting temperature of polypropylene and the filler. When the melt-mixing temperature is below the temperature range, a melt-mixing defect may occur due to non-melting of the resin, and when the melt-mixing temperature is above the temperature range, a thermal oxidation of the resin including polypropylene may occur severely due to excessively high temperature. It is preferable that the temperature does not exceed 250°C. Since the filler is inorganic material, an appropriate melt-mixing temperature is 180°C to 250°C.

Polypropylene and the filler may be fed into the compounder by being previously blended or may be fed thereto from separated feeders, respectively. Also, they may also be fed in a compound state that is previously primarily compounded in other mixer.

(b) melt-mixing a composition configured of polyethylene of 20-50 wt% having a melting temperature of 125°C or higher and a diluent of 80-50 wt%, is performed.

The diluent used in the present invention may use all of organic liquid phase compounds that form a single phase with resin at an extrusion processing temperature. For example, there are aliphatic such as nonane, decane, decalin, and paraffin oil, etc., or phthalic acid ester such as cyclic hydrocarbon, dibutyl phthalate, and dioctyl phthalate, etc.

Preferably, paraffin oil that is harmless to human body and has a high boiling point and less volatile components is suitable, and more preferably, paraffin oil having kinetic viscosity of 20cSt-200cSt at is suitable. If the kinetic viscosity of paraffin oil is above 200cSt, it leads to a high kinetic viscosity during an extrusion process so that it may cause problems of increase in load and defects on surface of film and sheet, etc., and it leads to difficulties in extrusion during the extrusion process so that it may cause problems of deterioration in productivity and reduction in permeability due to remaining oil, etc. If the kinetic viscosity of paraffin oil is below 20cSt, it leads for mixing to be difficult in extrusion processing due to viscosity difference with molten polyethylene in an extruder.

The preferable composition of polyethylene and diluent used in the present invention is constituted by the polyethylene of 20-50 wt% and the diluent of 80-50 wt%. If the content of the polyethylene is above 50 wt% (that is, if the diluent is below 50 wt%), the porosity is reduced, the pore size becomes small and the interconnection between the pores is few so that the permeability is noticeably deteriorated. To the contrary, if the content of the polyethylene is below 20 wt% (that is, if the diluent is above 80 wt%), the mixing of the polyethylene and the diluent is deteriorated so that the polyethylene is not thermodynamically melt-mixed in the diluent but is extruded in a gel shape, thereby causing problems of the fracture and the non-uniformity in thickness during stretching.

General additives for improving specific functions, such as anti oxidant, UV stabilizer, and antistatic agents, etc., may be further added into the composition, as needed.

The composition is melt-mixed using a twin-screw compounder, a mixer, or a banbary mixer, etc. designed for melt-mixing polyethylene and the diluent. The melt-mixing temperature is preferably 180°C to 300°C. The polyethylene and the diluent may be fed into the compounder by being previously blended or may be fed thereto from separated feeders, respectively.

(c) fabricating the melt-mixed compositions (a) and (b) to be a multilayer sheet so that the composition in (a) becomes an inner layer and the composition in (b) becomes surface layers, is performed.

The method to prepare a fabricating in a sheet from the melt may use all of a general casting method or a calendaring method. The temperature of the proper casting or can-lendering roll is 30°C to 80°C. If a temperature of the cooling roll is below 30°C, wrinkles of the sheet may occur due to the rapid cooling of the sheet, and if the cooling roll is above 80°C, surface defects, etc., may occur due to the insufficient cooling.

The method to manufacture the multilayer sheet may use a general co-extrusion method or a thermal bonding method, etc. The co-extrusion method is a method to fabricate a multilayer sheet by co-extruding melts extruded from each extruder when fabricating the sheet through a T-die with multi layers, and the thermal bonding method is a method to overlap sheets obtained from each extruder and to thermally bond them, while applying pressure thereto.

(d) stretching the multilayer sheet in the range that a crystal portion of 30-80wt% of polyethylene on the surface layer of the multilayer sheet is melted and fabricating it to be a film, is performed.

The stretching may use any stretching methods, such as a tenter type simultaneous stretching or sequential stretching that performs a primary stretching in a longitudinal direction using a roll and performs a secondary stretching in a traverse direction using a tenter, etc.

Stretching ratios are 4 times or more in a longitudinal direction and in a traverse direction, respectively, and a gross stretching ratio is preferably 25-60 times. When the stretching ratio in one direction is below 4 times, orientation in one direction is not sufficient and at the same time, the balance of physical property between the longitudinal direction and the traverse direction is broken so that puncture strength is deteriorated.

Also, when the gross stretching ratio is below 25 times, a local non-stretching occurs, and when the gross stretching ratio is above 60 times, the possibility that a fracture occurs during the stretching is high and the shrinkage of the final film is increased.

The stretching temperature varies depending on a melting point of polyethylene and concentration and sorts of diluent, which are used. The optimal stretching temperature is preferably selected from a temperature range that a crystal portion of 30-80 wt% of polyethylene of the multilayer sheet surface layer and the diluent layer is melted. The extent that the crystal portion is melted depending on the temperature may be obtained from a differential scanning calorimeter (DSC) analysis of a sheet. If the stretching temperature is selected from a temperature range lower than the temperature that the crystal portion of 30 wt% of polyethylene on the surface layer is melted, the film does not have softness so that the stretchability becomes bad, thereby having a high possibility that a fracture occurs at the time of stretching simultaneously with causing a local non-stretching. To the contrary, If the stretching temperature is selected from a temperature range higher than the temperature that the crystal portion of 80 wt% of polyethylene on the surface layer is melted, stretching is easy and local non-stretching hardly occurs, but a thickness deviation occurs due to partial over-stretching and orientation is not sufficient, thereby noticeably deteriorating the physical property. The stretching temperature range is lower than the temperature that polypropylene is melted, but is a possible temperature range for a low-temperature stretching of polypropylene. Through this stretching interface between the polypropylene and the filler is cracked to generate pores. The polypropylene stretched as above is stretched without using the diluent to have a high stretching effect, thereby contributing to the improvement of the physical property of the separator.

(e) extracting the diluent from the film, is performed.

The sheet which becomes thin through the stretching process, that is, the film, is extracted the diluent using organic solvent and dried. In the present invention, the usable organic solvent is not specifically limited but any solvent that can extract diluent used in extruding resin, preferably, methyl ethyl ketone, methylene chloride, and hexane, etc. that have a high extraction efficiency and dries rapidly. The extraction method may use respectively or combinationally all general solvent extraction methods such as an immersion method, a solvent spray method, and ultrasonic method, etc. When extracting, the content of remaining diluent should be 1 wt% or less. If the content of remaining diluent is above 1 wt%, the physical property is deteriorated and the permeability of the film is reduced.

The amount of remaining diluent is greatly influenced depending on an extraction temperature and an extraction time. The extraction temperature is preferably high in order to increase solubility of diluent and solvent, more preferably, 40°C or lower in consideration of a safety problem by means of boiling of the solvent. If the extraction temperature is lower than a freezing temperature of solvent, the extraction efficiency is noticeably deteriorated so that the extraction temperature must be higher than the freezing point of solvent. The extraction time varies depending on the film thickness, but is preferably, 2-4 minutes when manufacturing a microporous film having a thickness of 9-30$\mu$m.

(f) heat-setting the film is performed to prepare the microporous film according to the present invention.

The dried film is subject to heat-setting in order to reduce the shrinkage of a film by finally removing remaining tension. The heat-setting that fixes the film and applies heat thereto, is to remove remaining tension by compulsorily holding, stretching or contracting the film to be shrinked.

A high heat-setting temperature is advantageous for lowering the shrinkage, but when the heat-setting temperature is excessively high, micropores that are formed as the film is partially melted are closed to deteriorate the permeability. The heat-setting temperature is preferably selected from a temperature range that the crystal portion of 10-70 wt% of polyethylene of the film surface layer is melted. If the heat-setting temperature is selected from a temperature range lower than the temperature that the crystal portion of 10 wt% of polyethylene is melted, the reorientation of polyethylene molecules in the film is insufficient so that it cannot remove the remaining tension of the film, and if the heat-setting temperature is selected from a temperature range higher than the temperature that the crystal portion of 70 wt% of the film is melted, the micropores are closed by a partial melting so that the permeability is deteriorated.

Here, the heat-setting time should be relatively short when the heat-setting temperature is high, and the heat-setting time may be relatively long when the heat-setting temperature is low. When using a tenter type heat-setting apparatus, the heat-setting time is preferably 20 seconds to 2 minutes, more preferably, 1 minutes to 2 minutes in a temperature range that the crystal portion of 10-30 wt% of the film is melted and 20 seconds to 1 minute in a temperature range that the crystal portion of 30-70 wt% of the film is melted.

The multilayer microporous film according to the present invention not only has the low shutdown temperature based on polyethylene and the high melt fracture temperature based on polypropylene and the filler, but also has the uniform micropores and high strength/stability that are the property of the separator prepared using a wet process and the high strength/permeability according to large pores prepared using a dry process, making it possible to have a remarkable effects when being used in a high-capacity/high-power secondary battery. Also, the wax precipitation or inorganic materials separation from the surface layer is not generated, making it possible to have high quality stability and productivity.

**Advantageous Effects**

The microporous film for the secondary battery according to the present invention as described above is constituted as the multilayer of 3 layer or more and the filler is positioned on the inner layer so that the extraction of wax or inorganic materials separation from the surface layer is not generated, making it possible to have high quality stability and productivity.

Also, in the microporous film for the secondary battery according to the present invention, polypropylene and the filler are melt-mixed and positioned on the inner layer and pores are formed on the interface between the polypropylene and the filler in the inner layer during the stretching process. At this time, the filler functions as a core that makes pores, having an effect to improve the permeability of the film.

Also, the microporous film for the secondary battery according to the present invention is constituted as the multilayer of 3 layer, having excellent stiffness, permeability, thermal stability, and quality stability.

Also, the microporous film for the secondary battery according to the present invention has excellent quality uniformity and wide application field, making it possible to have a remarkable effect when being applied to a high-capacity/high-power battery.

**Brief Description of Drawings**

The above and other objects, features and advantages of the present invention will become apparent from the following description of preferred embodiments given in conjunction with the accompanying drawings, in which:

Fig. 1 shows a frame for measuring a melt fracture temperature of a microporous film prepared in one embodiment of the present invention; and

Fig. 2 shows a structure where a microporous film is set to a frame for measuring a melt fracture temperature of a microporous film prepared in one embodiment of the present invention.

[Detailed Description of Main Elements]

1: frame
2: microporous film
3: tape

**Best Mode for Carrying out the Invention**

Hereinafter, the present invention will be described in more detail through the embodiments set forth herein but the present invention is not limited thereto.

*Test method

The molecular weight and the molecular weight distribution of polyethylene and polypropylene were measured by a high temperature Gel Permeation Chromatography (GPC) of Polymer Laboratories.

The viscosity of a diluent was measured by Cannon Automatic Viscometer Model CAV-4.

The method for fabricating a sheet and a film from raw material were as follows.

※ Method for fabricating a sheet and a film

Polyethylene and a diluent were melt-mixed in a twin-screw compounder having $\Phi$=46mm. The melt-mixing temperature was 180-280°C. Polyethylene was fed into a main hoper and the diluent was fed into an extruder using a side feeder. The melt was extruded to a T- die and was then fabricated into a necessary thickness by a casting roll at 30°C.

Polypropylene and a filler were melt-mixed/extruded in a twin-screw compounder having $\Phi$=30mm. The melt-mixing/extrusion temperature was 220-330°C.

Polypropylene and the filler were fed into an extruder after mixing. The mixed/ extruded melt was extruded through a separate extruder to which a T-die is attached and was then fabricated into a necessary thickness by a casting roll at 30°C.

A multilayer sheet was prepared by overlapping each sheet and then thermally bonded them by compression molding. The thermal bonding temperature was 200°C and the thermal bonding time was 30 seconds.

In order to analyze a phenomenon that a crystal portion is melted depending on the temperature of the fabricated sheet, a Mettler Toledo DSC was used. The analysis conditions were as follows: sample weight, 5mg; and scanning rate, 10°C/min.

A simultaneous stretching was performed on the sheet in a tenter type laboratory stretching machine, while changing a stretching ratio and stretching temperature, wherein the stretching temperature was determined in a temperature range that the crystal portion of 30-80 wt% of polyethylene and the diluent layer is melted based on the result of DSC.

The extraction of the diluent was performed by immersion using methylene chloride, having the extraction time of 5 minutes.

After drying the film from which the diluent was extracted in the air, the heat-setting was performed by setting the film to a frame and putting it in a convection oven. The heat-setting was performed at 120°C for 1 minute and 30 seconds.

The thickness of the respective film layers were measured using a Scanning Electron Microscope (SEM). After cooling the prepared film under liquid nitrogen for 20 seconds and suddenly breaking it, the thickness of the prepared film was measured by observing the cross-section thereof.

For the prepared film, the most important physical properties of the microporous film, puncture strength, gas permeability, and melt fracture temperature, were measured and whether inorganic materials are separated was also judged so that the results thereof were represented by the Table below.

※ Method for measuring physical property

(1) The puncture strength was measured from the force when a pin having diameter of 1.0mm fractures a film at a speed of 120mm/min.

(2) The gas permeability was measured by a porometer (PMI Model CFP-1500-AEL). Generally the gas permeability is represented by Gurley number, but Gurley number does not compensate for the effect of a film thickness so that it is difficult to know the relative permeability according to the pore structure of the film itself. In order to solve this problem, the present invention used Darcy's permeability constants. The Darcy's permeability constants were obtained from equation 1 below and nitrogen was used in the present invention.

$$[\text{Equation 1}]$$
$$C = (8\ F\ T\ V)\ /\ (\pi D^2\ (P^2-1))$$

Herein, C = Darcy permeability constant
F = Flow velocity
T = Sample thickness
V = Viscosity of gas (0.185 for $N_2$)
D = Sample diameter
P = Pressure

In the present invention, average value of Darcy's permeability constant in the range of 100-200 psi was used.

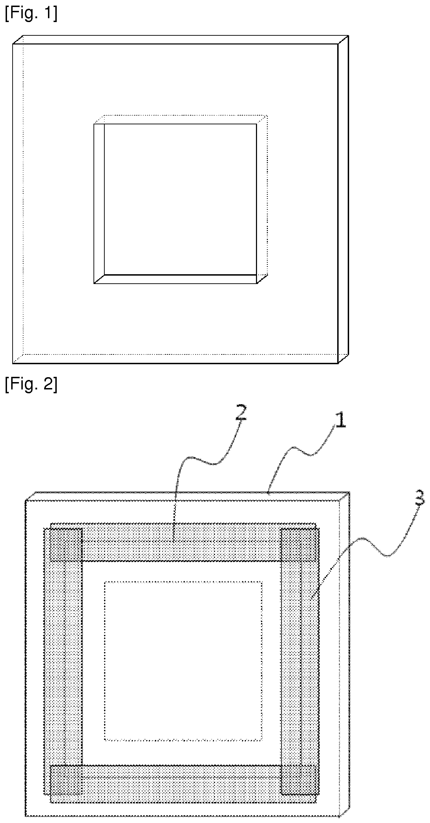

(3) In order to measure the melt fracture temperature of the film, the film (5cm x 5cm) as shown in [FIG. 2] was set to the frame (outer: 7.5cm x 7.5cm, inner diameter: 2.5cm x 2.5cm) as shown in [FIG. 1] using a polyimide tape and was put in a convention oven that is maintained at a set temperature for 10 minutes, and thereafter, it was observed whether the film is fractured. A highest temperature that the film is not fractured was defined as a melt fracture temperature.

(4) A tape was used in order to confirm a phenomenon that the inorganic material is separated from the surface. 3M scotch magic tape was used and the tape was adhered to the film surface using a small pressure of 10Pa and then was detached, thereby confirming whether inorganic materials were separated from the tape surface.

Example 1

As a surface layer 1 and a surface layer 2, polyethylene having weight-average molecular weight of $3.0 \times 10^5$ and having a melting temperature of 134°C and paraffin oil having kinetic viscosity of 95cSt at 40°C were used, wherein the contents of the two components were 30 wt% and 70 wt%, respectively. The polyethylene and the paraffin oil were melt-mixed in a twin-screw compounder having Φ=46mm and the melt-mixing temperature was 220°C. The polyethylene was fed into a main hoper and the paraffin oil that is a diluent, was fed into an extruder using a side feeder. The melt was extruded to a T-die and was fabricated by a casting roll at 30°C, wherein the thickness of the prepared sheets of the surface layers were $500\mu$m, respectively.

As an inner layer, polypropylene having weight-average molecular weight of $5.7x10^5$ and having a melting temperature of 163°C and $CaCO_3$ having average particle size of $2.5\mu$m were used, wherein the contents of the two components were 50 wt% and 50 wt%, respectively. The polypropylene and the filler of the inner layer were melt-mixed/extruded in a twin-screw compounder having Φ=30mm and the melt-mixing/extrusion temperature was 250°C. The polypropylene and the filler were fed into an extruder by being previously melt-mixed. The melt was extruded to a separate extruder to which a T-die is attached, having Φ=50mm, at 250°C and was fabricated by a casting roll at 30°C, wherein the thickness of the prepared sheet of the inner layer was $100\mu$m).

The surface layer 1, the inner layer, and the surface layer 2 prepared as above were meltbonded at 200°C for 30 seconds and then were stretched at 119°C six times in a longitudinal direction and six times in a traverse direction, totally, thirty-six times. The extraction of the diluent was performed in an immersion method using methylene chloride, having the extraction time of 5 minutes. Thereafter, after drying the film from which the diluent was extracted in the air, the heat-setting was performed by setting the film to a frame and putting it in a convection oven. The heat-setting was performed at 120°C for 1 minute and 30 seconds, and the thickness of the final film obtained through the extraction and the heat-setting was $20\mu$m. The physical property of the obtained separator was represented by Table 1 below.

Example 2

As a surface layer 1 and a surface layer 2, polyethylene having weight-average molecular weight of $3.0x10^5$ and having a melting temperature of 134°C and paraffin oil having kinetic viscosity of 95cSt at 40°C were used, wherein the contents of the two components were 30 wt% and 70 wt%, respectively. The thickness of the prepared sheets of the surface layers were: the surface layer 1, $250\mu$m; and the surface layer 2, $160\mu$m. As an inner layer, polypropylene having weight-average molecular weight of $5.7x10^5$ and having a melting temperature of 163°C and $BaTiO_3$ having average particle size of $0.04\mu$m were used, wherein the contents of the two components were 30 wt% and 70 wt%, respectively. The thickness of the prepared sheet of the inner layer was $50\mu$m.

The surface layer 1, the inner layer, and the surface layer 2 were meltbonded and then were stretched at 121°C five times in a longitudinal direction and five times in a traverse direction, totally, twenty-five times. The thickness of the final film obtained through the extraction and the heat-setting was $12\mu$m.

Other conditions were performed in the same manner as Example 1. The physical property of the obtained separator was represented by Table 1 below.

Example 3 (for comparison and/or reference only)

As a surface layer 1 and a surface layer 2, polyethylene having weight-average molecular weight of $3.0x10^5$ and having a melting temperature of 134°C and paraffin oil having kinetic viscosity of 95cSt at 40°C were used, wherein the contents of the two components were 40 wt% and 60 wt%, respectively. The thickness of the prepared sheets of the surface layers were $300\mu$m, respectively. As an inner layer, polypropylene having weight-average molecular weight of $2.5x10^5$ and having a melting temperature of 163°C and polycarbonate were used, wherein the contents of the two components were 60 wt% and 40 wt%, respectively. The thickness of the prepared sheet of the inner layer was $120\mu$m.

The surface layer 1, the inner layer, and the surface layer 2 were meltbonded and then were stretched at 122°C six times in a longitudinal direction and six times in a traverse direction, totally, thirty-six times.

The thickness of the final film obtained through the extraction and the heat-setting was $15\mu$m.

Other conditions were performed in the same manner as Example 1. The physical property of the obtained separator was represented by Table 1 below.

Example 4 (for comparison and/or reference only)

As a surface layer 1 and a surface layer 2, polyethylene with propylene as comonomer having weight-average molecular weight of $2.7x10^5$ and a melting temperature of 130°C, polymethylpentene and paraffin oil having kinetic viscosity of 95cSt at 40°C were used, wherein the contents of the polyethylene, the polymethypentene, and the paraffin oil were 27 wt%, 3 wt%, and 70 wt%, respectively. The polyethylene, the polymethypentene, and the paraffin oil of the surface layer were melt-mixed in a twin-screw compound having Φ=46mm. The melt-mixing temperature was 270°C. The polyethylene and the polymethylpentene were fed into a main hoper and the diluent was fed into an extruder using a side feeder. The melt was extruded from a T-die and was fabricated by a casting roll at 30°C, wherein the thickness of the prepared sheet of the surface layer was 430$\mu$m.

As an inner layer, the polypropylene and the polymethylpentene as a filler were melt-mixed/extruded in a twin-screw compounder having $\Phi$=30mm. The melt-mixing/extrusion temperature was 270°C. The polypropylene and the filler were fed into an extruder by being previously melt-mixed. The melt-mixed/extruded melt was extruded to a separate extruder to which a T-die is attached, having $\Phi$=50min, at 250°C and was fabricated to be a necessary thickness by a casting roll at 30°C,

The surface layer 1, the inner layer, and the surface layer 2 were meltbonded and then were stretched at 118°C six times in a longitudinal direction and five times in a traverse direction, totally, thirty times. The thickness of the final film obtained through the extraction and the heat-setting was 21$\mu$m.

Other conditions were performed in the same manner as Example 1. The physical property of the obtained separator was represented by Table 1 below.

Example 5

As a surface layer 1 and a surface layer 2, polyethylene having weight-average molecular weight of 3.0x10$^5$ and having a melting temperature of 134°C and paraffin oil having kinetic viscosity of 95cSt at 40°C were used, wherein the contents of the two components were 20 wt% and 80 wt%, respectively. The thickness of the prepared sheets of the surface layers were 350$\mu$m, respectively. As an inner layer, polypropylene having weight-average molecular weight of 5.7x10$^5$ and having a melting temperature of 163°C, polyethylene having weight-average molecular weight of 3.0x10$^5$ and having a melting temperature of 134°C and CaCO$_3$ having an average particle size of 0.08$\mu$m were used, wherein the contents of the three components were 50 wt%, 30 wt%, and 20 wt%, respectively. The thickness of the prepared sheet of the inner layer was 100$\mu$m.

This Example was performed in the same manner as Example 1, except that the polypropylene, the polyethylene, and the filler of the inner layer were melt-mixed/extruded in a twin-screw compounder having $\varphi$=30mm.

The surface layer 1, the inner layer, and the surface layer 2 were meltbonded and then were stretched at 116°C seven times in a longitudinal direction and six times in a traverse direction, totally, forty-two times. The thickness of the final film obtained through the extraction and the heat-setting was 13$\mu$m.

Other conditions were performed in the same manner as Example 1. The physical property of the obtained separator was represented by Table 1 below.

Comparative Example 1

As a layer 1, polyethylene having weight-average molecular weight of 3.0x10$^5$ and having a melting temperature of 134°C and paraffin oil having kinetic viscosity of 95cSt at 40°C were used, wherein the contents of the two components were 30 wt% and 70 wt%, respectively. The thickness of the prepared sheet of the layer was 1, 100$\mu$m.

The polyethylene and the paraffin oil were melt-mixed in a twin-screw compounder having $\Phi$=46mm. The melt-mixing temperature was 200°C. The polyethylene was fed into a main hoper and the diluent was fed into an extruder using a side feeder. The melt was extruded from an extruder and was fabricated to be a proper thickness by a casting roll at 30°C.

The layer 1 was solely stretched at 120°C six times in a longitudinal direction and six times in a traverse direction, totally, thirty-six times. The thickness of the final film obtained through the extraction and the heat-setting was 20$\mu$m.

Other conditions were performed in the same manner as Example 1. The physical property of the obtained separator was represented by Table 2 below.

Comparative Example 2

As a surface layer 1, polyethylene having weight-average molecular weight of 3.0x10$^5$ and having a melting temperature of 134°C and paraffin oil having kinetic viscosity of 95cSt at 40°C were used, wherein the contents of the two components were 90 wt% and 10 wt%, respectively. The polyethylene and the paraffin oil of the surface layer 1 were melt-mixed in a twin-screw compounder having $\Phi$=46mm. The melt-mixing temperature was 200°C. The polyethylene was fed into a main hoper and the diluent was fed into an extruder using a side feeder. The melt was extruded to a T-die and was fabricated by a casting roll at 30°C, wherein the thickness of the prepared sheet of the surface layer 1 was 400$\mu$m.

As a surface layer 2, polypropylene having weight-average molecular weight of 5.7x10$^5$ and having a melting temperature of 163°C was used. The polypropylene of the surface layer 2 was melt-mixed/extruded in a twin-screw compounder having $\varphi$=46mm. The melt was extruded to a T-die and was fabricated by a casting roll at 30°C, wherein the thickness of the prepared sheet of the surface layer 2 was 70$\mu$m.

As an inner layer, polypropylene having weight-average molecular weight of 5.7x10$^5$ and having a melting temperature of 163°C and CaCO$_3$ having average particle size of 1.5$\mu$m were used, wherein the contents of the two components were 50 wt% and 50 wt%, respectively. The polypropylene and the filler of the inner layer were mixed/extruded in a twin-screw compound having Φ=30mm and the mixing/extrusion temperature was 230°C. The polypropylene and the filler were fed into an extruder by being previously mixed. The mixed/extruded melt was extruded from a separate extruder to which a T-die is attached, having Φ=50mm, at 250°C and was fabricated by a casting roll at 30°C, wherein the thickness of the prepared sheet of the inner layer was 100$\mu$m.

The surface layer 1, the inner layer, and the surface layer 2 prepared as above were meltbonded at 200°C for 30 seconds and then were stretched at 126°C six times in a longitudinal direction and six times in a traverse direction, totally, thirty-six times. The thickness of the final film obtained through the extraction and the heat-setting was 14$\mu$m.

Other conditions were performed in the same manner as Example 1. The physical property of the obtained separator was represented by Table 2 below.

Comparative Example 3

As a surface layer 1, polyethylene having weight-average molecular weight of 3.0x10$^5$ and having a melting temperature of 134°C and paraffin oil having kinetic viscosity of 95cSt at 40°C were used, wherein the contents of the two components were 30 wt% and 70 wt%, respectively. The polyethylene and the paraffin oil that is a diluent, of the surface layer 1 were melt-mixed in a twin-screw compounder having Φ=46mm and the melt-mixing temperature was 200°C. The polyethylene was fed into a main hoper and the diluent was fed into an extruder using a side feeder. The melt was extruded to a T-die and was fabricated to be a proper thickness, by a casting roll at 30°C, wherein the thickness of the prepared sheet of the surface layer 1 was 700$\mu$m.

As a surface layer 2, polypropylene having weight-average molecular weight of 5.7x10$^5$ and having a melting temperature of 163°C, polyethylene having weight-average molecular weight of 3.0x10$^5$ and having a melting temperature of 134°C, and CaCO$_3$ having average particle size of 2.5$\mu$m were used, wherein the contents of the three components were 25 wt%, 25 wt%, and 50 wt%, respectively. The polypropylene, the polyethylene, and the filler of the surface layer 2 were melt-mixed/extruded in a twin-screw compound having Φ=30mm. The melt-mixing/extrusion temperature was 230°C. The polypropylene, the polyethylene, and the filler were fed into an extruder by being previously melt-mixed. The melt was extruded to a separate extruder to which a T-die is attached, having Φ=50mm, at 250°C and was fabricated to be a proper thickness by a casting roll at 30°C, wherein the thickness of the prepared sheet of the surface layer 2 was 300$\mu$m.

As an inner layer, polyethylene having weight-average molecular weight of 3.0x10$^5$ and having a melting temperature of 134°C and CaCO$_3$ having average particle size of 2.5$\mu$m that is a filler were used, wherein the contents of the two components were 50 wt% and 50 wt%, respectively. The polyethylene and the filler of the inner layer were melt-mixed/extruded in a twin-screw compounder having Φ=30mm and the melt-mixing/extrusion temperature was 230°C. The polyethylene and the filler were fed into an extruder by being previously melt-mixed. The melt was extruded to a separate extruder to which a T-die is attached, having Φ=50mm, at 250°C and was fabricated by a casting roll at 30°C, wherein the thickness of the prepared sheet of the inner layer was 10$\mu$m.

The surface layer 1, the inner layer, and the surface layer 2 prepared as above were meltbonded and then were stretched at 122°C seven times in a longitudinal direction and three times in a traverse direction, totally, twenty-one times. The thickness of the final film obtained through the extraction and the heat-setting was 40.4$\mu$m.

Other conditions were performed in the same manner as Example 1. The physical property of the obtained separator was represented by Table 2 below.

Comparative Example 4

As a surface layer 1 and a surface layer 2, polyethylene having weight-average molecular weight of 3.0x10$^5$ and having a melting temperature of 134°C and paraffin oil having kinetic viscosity of 95cSt at 40°C were used, wherein the contents of the two components were 30 wt% and 70 wt%, respectively. The thickness of the prepared sheets of the surface layers 1 and 2 were 330$\mu$m, respectively. As an inner layer, polypropylene having weight-average molecular weight of 5.7x10$^5$ and having a melting temperature of 163°C and CaCO$_3$ having average particle size of 2.5$\mu$m were used, wherein the contents of the two components were 90 wt% and 10 wt%, respectively. The thickness of the prepared sheet of the inner layer was 330$\mu$m.

The surface layer 1, the inner layer, and the surface layer 2 were meltbonded and then were stretched at 122°C six times in a longitudinal direction and six times in a traverse direction, totally, thirty-six times. The thickness of the final film obtained through the extraction and the heat-setting was 20$\mu$m.

Other conditions were performed in the same manner as Example 1. The physical property of the obtained separator was represented by Table 2 below.

Comparative Example 5

As a surface layer 1, polyethylene having weight-average molecular weight of $3.0\times10^5$ and having a melting temperature of 134°C and paraffin oil having kinetic viscosity of 95cSt at 40°C were used, wherein the contents of the two components were 30 wt% and 70 wt%, respectively. The polyethylene and the paraffin oil that is a diluent, of the surface layer 1 were melt-mixed in a twin-screw compounder having $\Phi$=46mm and the melt-mixing temperature was 200°C. The polyethylene was fed into a main hoper and the diluent was fed into an extruder using a side feeder. The melt was extruded to a T-die and was fabricated to be a proper thickness, by a casting roll at 30°C, wherein the thickness of the prepared sheet of the surface layer 1 was 500$\mu$m.

As a surface layer 2, polypropylene having weight-average molecular weight of $5.7\times10^5$ and having a melting temperature of 163°C and polyethylene having weight-average molecular weight of $3.0\times10^5$ and having a melting temperature of 134°C were used, wherein the contents of the two components were 40 wt% and 60 wt%, respectively. The polypropylene and the polyethylene of the surface layer 2 were melt-mixed/extruded in a twin-screw compounder having $\Phi$=30mm and the melt-mixing/extrusion temperature was 230°C. The polypropylene and the polyethylene were fed into an extruder by being previously melt-mixed. The melt was extruded to a separate extruder to which a T-die is attached, having $\Phi$=50mm, at 250°C and was fabricated to be a proper thickness by a casting roll at 30°C, wherein the thickness of the prepared sheet of the surface layer 2 was 500$\mu$m.

As an inner layer, polypropylene having weight-average molecular weight of $5.7\times10^5$ and having a melting temperature of 163°C and polycarbonate that is a filler were used, wherein the contents of the two components were 10 wt% and 90 wt%, respectively. The polypropylene and the polycarbonate of the inner layer were melt mixed/extruded in a twin-screw compound having $\Phi$=30mm and the melt-mixing/extrusion temperature was 280°C. The polypropylene and the polycarbonate were fed into an extruder by being previously melt-mixed. The melt was extruded from a separate extruder to which a T- die is attached, having $\Phi$=50mm, at 280°C and was fabricated to be a proper thickness by a casting roll at 30°C, wherein the thickness of the prepared sheet of the inner layer was 100$\mu$m.

The surface layer 1, the inner layer, and the surface layer 2 prepared as above were meltbonded and then were tried to be stretched at 118°C-123°C six times in a longitudinal direction and six times in a traverse direction, totally, thirty-six times. However, a fracture was generated so that the stretching could not be performed.

Other conditions were performed in the same manner as Example 1.

[Table 1]

| Classification | | Example 1 | Example 2 | Example 3 | Example 4 | Example 5 |
|---|---|---|---|---|---|---|
| Composition of Surface layer 1 (wt%) | | PE (100) | PE (100) | PE (100) | PE/PMP (90/10) | PE (100) |
| Composition of Inner layer (wt%) | Resin | PP (50) | PP (30) | PP (60) | PP (80) | PP/PE (50/30) |
| | Filler | $CaCO_3$ (50) | $BaTiO_3$ (70) | PC (40) | PMP (20) | $CaCO_3$ (20) |
| Composition of Surface layer 2 (wt%) | | PE (100) | PE (100) | PE (100) | PE/PMP (90/10) | PE (100) |
| Thickness ($\mu$m) | Surface layer 1 | 8 | 6 | 5 | 10 | 5 |
| | Inner layer | 4 | 2 | 5 | 1 | 3 |
| | Surface layer 2 | 8 | 4 | 5 | 10 | 5 |
| Ratio of Inner layer (%) | | 20 | 17 | 33 | 5 | 23 |
| Puncture Strength (N/$\mu$m) | | 0.26 | 0.19 | 0.24 | 0.14 | 0.22 |
| Permeability ($10^{-5}$ Darcy) | | 1.8 | 2.5 | 2.0 | 1.3 | 2.3 |
| Melt fracture temperature (°C) | | 177 | 175 | 173 | 170 | 155 |
| Whether inorganic material is separated | | None | None | None | None | None |
| PE: Polyethylene, PP: Polypropylene, PC: Polycarbonate, PMP: Polymethylpentene | | | | | | |

[Table 2]

| Classification | | Comparative Example 1 | Comparative Example 2 | Comparative Example 3 | Comparative Example 4 | Comparative Example 5 |
|---|---|---|---|---|---|---|
| Composition of Surface layer 1 (wt%) | | PE (100) | PE (100) | PE (100) | PE (100) | PE (100) |
| Composition of Inner layer (wt%) | Resin | - | PP (50) | PE (50) | PP (90) | PP (10) |
| | Filler | - | $CaCO_3$ (50) | $CaCO_3$ (50) | $CaCO_3$ (10) | PC (90) |
| Composition of Surface layer 2 (wt%) | | - | PP (100) | PP/PE/ $CaCO_3$ (25/25/50) | PE (100) | PP/PE (40/60) |
| Thickness ($\mu$m) | Surface layer 1 | 20 | 8 | 20 | 5 | Non-stretchable |
| | Inner layer | - | 4 | 0.4 | 10 | |
| | Surface layer 2 | - | 2 | 20 | 5 | |
| Rate of Inner layer (%) | | 0 | 29 | 0.9 | 50 | - |
| Puncture Strength (N/$\mu$m) | | 0.24 | 0.3 | 0.1 | 0.24 | - |
| Permeability ($10^{-5}$ Darcy) | | 2.0 | - | 3.0 | - | - |
| Melt fracture temperature (°C) | | 135 | 175 | 147 | 175 | - |
| Whether inorganic material is separated | | None | None | Separated | None | - |
| PE: Polyethylene, PP: Polypropylene, PC: Polycarbonate, PMP: Polymethylpentene | | | | | | |

Those skilled in the art will appreciate that the conceptions and specific embodiments disclosed in the foregoing description may be readily utilized as a basis for modifying or designing other embodiments for carrying out the same purposes of the present invention. Those skilled in the art will also appreciate that such equivalent embodiments do not depart from the scope of the invention as set forth in the appended claims.

**Industrial Applicability**

The microporous film for the secondary battery according to the present invention has excellent quality uniformity and wide application field, making it possible to have a remarkable effect when being applied to a high-capacity/high-power battery.

**Claims**

1.  A microporous film that is a 3 layer microporous film, comprising:

    an inner layer that includes polypropylene of 20-80 wt% having a melting temperature of 150 °C or higher and a filler of 80-20 wt% having a melting temperature of 140 °C or higher,
    wherein a gross content of the filler and polypropylene in the inner layer is 60wt% or more, and
    both surface layers that include polyethylene,
    wherein at least one layer of the both surface layers includes polyethylene of 70 wt% or more,
    **characterized in that** the filler having a melting temperature of 140 °C or higher is selected from silicon dioxide ($SiO_2$), aluminum dioxide ($Al_2O_3$), calcium carbonate ($CaCO_3$), titanium dioxide ($TiO_2$), $SiS_2$, $SiPO_4$, MgO, ZnO, $BaTiO_3$ and a mixture thereof and the filler has an average particle size of 0.01 to 5 $\mu$m.

2. The microporous film according to claim 1, wherein the inner layer includes polypropylene of 20-80 wt% having a melting temperature of 150 °C or higher and a filler of 80-20 wt% having a melting temperature of 140 °C or higher, the content of filler and polypropylene in the inner layer is 80 wt% or more, and both surface layers include polyethylene of 80 wt% or more, respectively.

3. The microporous film according to claim 2, wherein the inner layer includes polypropylene of 30-70 wt% having a melting temperature of 150 °C or higher and a filler of 70-30 wt% having a melting temperature of 140 °C or higher, and both surface layers are made of polyethylene.

4. The microporous film according to any one of claims 1 to 3, wherein the thickness of the inner layer is 0.5 $\mu$m or more, the total thickness of the film is 7-50 $\mu$m, and the thickness ratio of the inner layer to the total thickness is 1 %-50%.

5. The microporous film according to claim 4, wherein the puncture strength of the film is 0.12 N/$\mu$m or more, the permeability is 1.0 x 10$^{-5}$ Darcy or more, and the melt fracture temperature is 150 °C or higher.

6. The microporous film according to claim 5, wherein the puncture strength of the film is 0.20 N/$\mu$m or more, the permeability is 1.5x10$^{-5}$ Darcy or more, and the melt fracture temperature is 160 °C or higher.

7. A multilayer microporous film, comprising the 3 layer microporous film according to any one of claims 1 to 3.

8. A multilayer microporous film, comprising the 3 layer microporous film according to claim 4.

9. A multilayer microporous film, comprising the 3 layer microporous film according to claim 5 or 6.

**Patentansprüche**

1. Mikroporöser Film, der ein dreischichtiger mikroporöser Film ist, umfassend:

eine innere Schicht, die enthält: Polypropylen von 20-80 Gew.-% mit einer Schmelztemperatur von 150°C oder höher und einen Füllstoff von 80-20 Gew.-% mit einer Schmelztemperatur von 140°C oder höher, wobei ein Gesamtgehalt des Füllstoffs und von Polypropylen in der inneren Schicht 60 Gew.-% oder mehr beträgt, und
beide Oberflächenschichten, die Polyethylen enthalten,
wobei mindestens eine Schicht der beiden Oberflächenschichten enthält: Polyethylen von 70 Gew.-% oder mehr, **dadurch gekennzeichnet , dass** der Füllstoff mit einer Schmelztemperatur von 140°C oder höher ausgewählt ist aus Siliciumdioxid (SiO$_2$), Aluminiumdioxid (Al$_2$O$_3$), Calciumcarbonat (CaCO$_3$), Titandioxid (TiO$_2$), SiS$_2$, SiPO$_4$, MgO, ZnO, BaTiO$_3$ und einem Gemisch davon, und der Füller eine durchschnittliche Teilchengröße von 0,01 bis 5 $\mu$m aufweist.

2. Mikroporöser Film nach Anspruch 1, wobei die innere Schicht enthält: Polypropylen von 20-80 Gew.-% mit einer Schmelztemperatur von 150°C oder höher und einen Füllstoff von 80-20 Gew.-% mit einer Schmelztemperatur von 140°C oder höher, der Gehalt an Füllstoff und Polypropylen in der inneren Schicht 80 Gew.-% oder mehr ist und beide Oberflächenschichten Polyethylen jeweils von 80 Gew.-% oder mehr enthalten.

3. Mikroporöser Film nach Anspruch 2, wobei die innere Schicht enthält: Polypropylen von 30-70 Gew.-% mit einer Schmelztemperatur von 150°C oder höher und einen Füllstoff von 70-30 Gew.-% mit einer Schmelztemperatur von 140°C oder höher, und beide Oberflächenschichten aus Polyethylen hergestellt sind.

4. Mikroporöser Film nach einem der Ansprüche 1 bis 3, wobei die Dicke der inneren Schicht 0,5 $\mu$m oder mehr beträgt, die Gesamtdicke des Films 7-50 $\mu$m beträgt und das Dickenverhältnis der inneren Schicht zu der Gesamtdicke 1%-50% beträgt.

5. Mikroporöser Film nach Anspruch 4, wobei die Einstichfestigkeit des Films 0,12 N/$\mu$m oder mehr beträgt, die Permeabilität 1,0 x 10$^{-5}$ Darcy oder mehr beträgt und die Schmelzbruchtemperatur 150°C oder mehr beträgt.

6. Mikroporöser Film nach Anspruch 5, wobei die Einstichfestigkeit des Films 0,20 N/$\mu$m oder mehr beträgt, die Permeabilität 1,5 x 10$^{-5}$ Darcy oder mehr beträgt und die Schmelzbruchtemperatur 160°C oder mehr beträgt.

7. Mehrschichtiger mikroporöser Film, umfassend den dreischichtigen mikroporösen Film nach einem der Ansprüche 1 bis 3.

8. Mehrschichtiger mikroporöser Film, umfassend den dreischichtigen mikroporösen Film nach Anspruch 4.

9. Mehrschichtiger mikroporöser Film, umfassend den dreischichtigen mikroporösen Film nach den Ansprüchen 5 oder 6.

**Revendications**

1. Film microporeux qui est un film microporeux à 3 couches, comprenant :

    une couche intérieure qui comprend du polypropylène ente 20 et 80 % en poids ayant une température de fusion de 150 °C ou plus et une charge entre 80 et 20 % en poids ayant une température de fusion de 140 °C ou plus,
    dans lequel une teneur brute de la charge et du polypropylène dans la couche intérieure est de 60 % en poids ou plus, et
    deux couches de surface qui comprennent du polyéthylène,
    dans lequel au moins une couche parmi les deux couches de surface comprend du polyéthylène à 70 % en poids ou plus,
    **caractérisé en ce que** la charge ayant une température de fusion de 140 °C ou plus est choisie parmi du dioxyde de silicium ($SiO_2$), dioxyde d'aluminium ($Al_2O_3$), carbonate de calcium ($CaCO_3$), dioxyde de titane ($TiO_2$), $SiS_2$, $SiPO_4$, MgO, ZnO, $BaTiO_3$ et un mélange de ceux-ci et la charge a une taille moyenne de particule de 0,01 à 5 $\mu$m.

2. Film microporeux selon la revendication 1, dans lequel la couche intérieure comprend du polypropylène entre 20 et 80 % en poids ayant une température de fusion de 150 °C ou plus et une charge entre 80 et 20 % en poids ayant une température de fusion de 140 °C ou plus, la teneur en charge et en polypropylène dans la couche intérieure est de 80 % en poids ou plus, et les deux couches de surface comprennent respectivement du polyéthylène à 80 % en poids ou plus.

3. Film microporeux selon la revendication 2, dans lequel la couche intérieure comprend du polypropylène entre 30 et 70 % en poids ayant une température de fusion de 150 °C ou plus et une charge entre 70 et 30 % en poids ayant une température de fusion de 140 °C ou plus, et les deux couches de surface sont constituées de polyéthylène.

4. Film microporeux selon l'une quelconque des revendications 1 à 3, dans lequel l'épaisseur de la couche intérieure est de 0,5 $\mu$m ou plus, l'épaisseur totale du film est comprise entre 7 et 50 $\mu$m, et le rapport d'épaisseur entre la couche intérieure et l'épaisseur totale est de 1 % à 50 %.

5. Film microporeux selon la revendication 4, dans lequel la résistance à la perforation du film est de 0,12 N/$\mu$m ou plus, la perméabilité est de 1,0 x 10$^{-5}$ Darcy ou plus, et la température de rupture à l'état fondu est de 150 °C ou plus.

6. Film microporeux selon la revendication 5, dans lequel la résistance à la perforation du film est de 0,20 N/$\mu$m ou plus, la perméabilité est de 1,5 x 10$^{-5}$ Darcy ou plus, et la température de rupture à l'état fondu est de 160 °C ou plus.

7. Film microporeux multicouche, comprenant le film microporeux à 3 couches selon l'une quelconque des revendications 1 à 3.

8. Film microporeux multicouche, comprenant le film microporeux à 3 couches selon la revendication 4.

9. Film microporeux multicouche, comprenant le film microporeux à 3 couches selon la revendication 5 ou 6.

EP 2 274 787 B1

[Fig. 1]

[Fig. 2]

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6949315 B
- US 5641565 A
- US 20060055075 A
- US 5691077 A
- JP 2007088815 A
- WO 04089627 A
- WO 06038532 A
- CA 2627137 A1